# EUROPEAN PATENT APPLICATION

(11) **EP 4 733 252 A1**
(43) Date of publication of application: **29.04.2026**
(21) Application number: 24790810.6
(22) Date of filing: 11.09.2024
(51) Int. Cl.: C01B 25/37, H01M 4/58, H01M 4/136, H01M 10/0525, H01M 10/052

(54) **IRON PHOSPHATE MATERIAL AND PREPARATION METHOD THEREFOR, POSITIVE ELECTRODE MATERIAL, POSITIVE ELECTRODE SHEET, AND SECONDARY BATTERY**

(30) Priority: 06.09.2024 CN 202411256393
(71) Applicant: Hubei Hongrun High-Tech New Materials Co., Ltd., Ezhou, Hubei 436070 (CN)
(72) Inventor: HUANG, Tianyu, Ezhou, Hubei 436070 (CN); GUO, Miyan, Ezhou, Hubei 436070 (CN); LI, Wenjie, Ezhou, Hubei 436070 (CN)
(74) Representative: Michalski Hüttermann & Partner Patentanwälte mbB
(86) International application number: PCT/CN2024/118298
(87) International publication number: WO 2026/051096

(57) **Abstract**

The present application provides an iron phosphate material, a preparation method thereof, a cathode material, a cathode plate and a secondary battery. The iron phosphate material is doped with titanium, at least part of surfaces of primary particles of the iron phosphate material are in stacked sheet structures, the stacked sheet structure has a plurality of sheet layers, and any two adjacent sheet layers are respectively located on opposite sides of each other.

## Description

This application claims priority to Chinese patent application No. 202411256393.2, filed on September 06, 2024, entitled "IRON PHOSPHATE MATERIAL, PREPARATION METHOD THEREOF, CATHODE MATERIAL, CATHODE PLATE, AND SECONDARY BATTERY", the content of which is hereby incorporated by reference in its entirety.

### TECHNICAL FIELD

The present application relates to the technical field of lithium-ion batteries, and in particular, to an iron phosphate material, a preparation method thereof, a cathode material, a cathode plate and a secondary battery.

### BACKGROUND

Lithium iron phosphate (LiFePO₄) is a cathode material. Compared with other types of cathode materials, lithium iron phosphate has high safety and a suitable discharge specific capacity, and thus is widely used in lithium-ion batteries.

An iron phosphate material is a common precursor material in the production of lithium iron phosphate. A currently common process route is to form lithium iron phosphate by a solid-phase reaction of iron phosphate with lithium carbonate and glucose. Properties and performances of the prepared lithium iron phosphate are largely determined by the iron phosphate material.

Micromorphology of iron phosphate has a significant impact on macroscopic properties of iron phosphate. For example, particle morphology in the iron phosphate material may directly affect the overall packing density and contact area of the iron phosphate material. Primary particles of the iron phosphate material in the conventional art are mostly dispersed irregular particles or spheroids in the microscopic level. A spherical shape is a geometric shape with a minimum specific surface area, which results in that an overall specific surface area of the iron phosphate material and a contact area with the outside are relatively small. Charge and discharge efficiency of a cathode material prepared therefrom is low. An iron phosphate material with sheet-shaped primary particles is further proposed in some conventional arts. However, the sheet-shaped particles are randomly and disorderly distributed, and there are obvious contact stacking and horizontal and vertical interleaving between sheets, which has limited improvement on the specific surface area and the contact area, resulting in limited improvement on the charge and discharge efficiency of the prepared cathode material.

Based on the above situation, further research is still needed to increase the specific surface area and the contact area of the iron phosphate material.

### SUMMARY

In view of the technical problems in the background, the present application provides an iron phosphate material, a preparation method thereof, a cathode material, a cathode plate, and a secondary battery. The iron phosphate material of the present application can have effectively increased specific surface area and contact area through structural design of the iron phosphate material.

In a first aspect, an embodiment of the present application provides an iron phosphate material. The iron phosphate material is doped with titanium, and at least part of surfaces of primary particles of the iron phosphate material are in stacked sheet structures. The stacked sheet structure has a plurality of sheet layers, and any two adjacent sheet layers are respectively located on opposite sides of each other in a stacking direction. The stacking direction intersects an extending direction of the sheet layer.

In the embodiment, the iron phosphate material is doped with titanium, and the titanium causes defects generated in the iron phosphate material during crystallization, which hinders growth of the iron phosphate in a specific direction, thereby being conducive to forming the stacked sheet structure on surfaces of iron phosphate particles. The surfaces of the primary particles of the iron phosphate material have the stacked sheet structures. Any two adjacent sheet layers in the plurality of sheet layers of the stacked sheet structures are respectively located on opposite sides of each other in a stacking direction. Different from the conventional disorderedly distributed sheet-shaped iron phosphate material, the stacked sheet structure forms a short-range orderly morphology, which prevents a waste of space caused by horizontal and vertical interleaving of the sheet layers, thereby significantly increasing the specific surface area and contact area of the primary particles. In addition, since an ionic radius of titanium ions is smaller than that of iron ions, an ion channel at a site occupied by the titanium ions is broadened, which is conducive to improving ion migration efficiency for the prepared cathode material during charge and discharge.

In some embodiments of the present application, the surfaces of the primary particles of the iron phosphate material are split into the stacked sheet structure; and/or
a surface of a single primary particle of the iron phosphate material has a plurality of stacked sheet structures; and/or
in each stacked sheet structure, a number of the sheet layers is 2 to 4.

In the embodiments, the connection between a stacked sheet structure formed by splitting of the surfaces of the primary particles and a substrate where it is located is more stable, which facilitates to maintain structural integrity during subsequent processing, thereby enabling to remain a more stable iron phosphate material structure during subsequent processing and charge-discharge processes.

In the embodiments, the plurality of stacked sheet structures can further increase the specific surface area and the contact area of the single primary particle, which facilitates to further improve charge-discharge performance of the prepared cathode material.

In the embodiments, the stacked sheet structure is provided with 2 to 4 sheet layers, which facilitates to take into account the relatively large specific surface area and the stability of a single stacked sheet structure.

In some embodiments of the present application, a particle size of a single primary particle ranges from 300 nm to 1000 nm; and/or
in the stacked sheet structure, a thickness of each sheet layer ranges from 40 nm to 60 nm; and/or
in the stacking direction, a maximum spacing between two adjacent sheet layers ranges from 20 nm to 50 nm.

In the embodiments, the particle size of the single primary particle is within the above-described range, which facilitates to form a stacked sheet structure with relatively large size and spacing on the surface of the single primary particle, thereby producing relatively large specific surface area and contact area.

In the embodiments, the thickness of the sheet layer and the maximum spacing between two adjacent sheet layers are within the above-described ranges, which facilitates the iron phosphate material to have relatively high structural stability and a relatively large specific surface area.

In some embodiments of the present application, the iron phosphate material is represented by a chemical formula of Fe₍₁₋ₙ₎Ti_{0.75n}PO₄, where 0.02≤n≤0.04.

In the embodiments, the iron phosphate material with the chemical formula has a more regular crystal lattice structure and a relatively high degree of crystallization, which ensures integrity of crystal lattices of the prepared cathode material, such that the cathode material has relatively good ion mobility.

In some embodiments of the present application, a specific surface area of the iron phosphate material ranges from 9.4 m²/g to 14 m²/g; and/or
a D50 particle size of the iron phosphate material ranges from 30 µm to 60 µm; and/or
a tap density of the iron phosphate material ranges from 0.9 g/cm³ to 1.05 g/cm³.

In the embodiments, the iron phosphate material with the above specific surface area is conducive to preparing a cathode material with relatively good charge-discharge performance.

In the embodiments, the iron phosphate material with the above particle size characteristics is conducive to improving electrochemical performance of the prepared cathode material.

In the embodiments, the iron phosphate material with the above tap density has a relatively large specific surface area, and is also conducive to increasing compaction density of the prepared cathode material.

In a second aspect, embodiments of the present application provide a method for preparing an iron phosphate material, including the following steps:
providing a mixture including a ferrous salt, a titanium salt and a phosphate salt;
mixing the mixture with a first alkali source to obtain a first slurry;
adding an oxidizing agent and a second alkali source to the first slurry to obtain a second slurry;
subjecting the second slurry to first solid-liquid separation to obtain a filter cake;
mixing the filter cake with a phosphoric acid solution, and ageing same to obtain a third slurry; and
subjecting the third slurry to second solid-liquid separation, drying, and calcination to obtain the iron phosphate material.

In the embodiments, when the first alkali source is added, ferrous ions and titanium ions can co-precipitate to form a mixture of a ferrous phosphate precipitate and a titanium phosphate precipitate. Then, the oxidizing agent and the second alkali source are added, such that titanium ions can be doped into the iron phosphate precipitate *in situ* during the precipitation. Next, during the aging, the amorphous iron phosphate precipitate dissolves and recrystallizes into iron phosphate dihydrate crystals. During the calcination, titanium doped in iron phosphate causes defects in the crystal lattice and thus hinders growth thereof in a specific direction, rendering surfaces of the iron phosphate particles to split and form a plurality of sheets which are sequentially arranged and spaced at the top end, thereby forming a stacked sheet structure. The iron phosphate material in any one of the above embodiments can be prepared by the preparation method in the embodiments.

In some embodiments of the present application, in the mixture, a ratio of an amount of substance of iron to an amount of substance of titanium is 1: (0.015 to 0.03); and/or
in the mixture, a ratio of the amount of substance of iron to an amount of substance of phosphorus is 1: (0.97 to 1.07); and/or
the oxidizing agent includes a hydrogen peroxide solution, and during adding the oxidizing agent and the second alkali source to the first slurry, a ratio of an amount of substance of hydrogen peroxide in the hydrogen peroxide solution to an amount of substance of ferrous ions in the mixture is (0.55 to 0.75): 1; and/or
the oxidizing agent includes oxygen gas or compressed air, and during adding the oxidizing agent and the second alkali source to the first slurry, a ratio of an amount of substance of the oxygen gas to the amount of substance of the ferrous ions in the mixture is (0.275 to 0.375): 1; or a ratio of an amount of substance of oxygen gas in the compressed air to the amount of substance of the ferrous ions in the mixture is (0.275 to 0.375): 1.

In the embodiments, the above-described ratio of iron to titanium is selected, which is conducive to ensuring that the formed iron phosphate has a good crystal lattice structure during subsequent deposition, and titanium can be fully doped into iron phosphate, thereby further facilitating to form a relatively large stacked sheet structure on the surfaces of the iron phosphate particles by splitting.

In the embodiments, the above-described ratio of iron to phosphorus is selected, which is conducive to ensuring sufficient precipitation of iron and titanium during the subsequent deposition, thereby improving utilization of iron and titanium.

In the embodiments, water is the only oxidation product of the hydrogen peroxide solution, so that the selection of the hydrogen peroxide solution as the oxidizing agent may basically not lead to mixing of impurity elements into the iron phosphate precipitate, which facilitates to obtain a relatively pure iron phosphate precipitate. Further, the ratio of the amounts of substance of the hydrogen peroxide solution to ferrous ions is controlled within the above-described range, which ensures fully oxidizing of the ferrous ions while preventing introduction of excessive impurities. Since oxygen gas and the compressed air are gases, when the oxygen gas or the compressed air is selected as the oxidizing agent, mixing of impurity elements into the iron phosphate precipitate is prevented, which facilitates to obtain a relatively pure iron phosphate precipitate. Correspondingly, a ratio of the amount of the oxygen gas to the amount of substance of the ferrous ions or a ratio of the amount of oxygen gas in the compressed air to the amount of substance of the ferrous ions is controlled within the corresponding range, which is conducive to fully oxidizing the ferrous ions.

In some embodiments of the present application, a pH value of the mixture is 0.5 to 1.5; and/or
after adding the first alkali source to the mixture, a pH value of the first slurry obtained is controlled to be 2.0 to 2.5; and/or
during adding the oxidizing agent and the second alkali source to the first slurry, a pH value is controlled to be 2.0 to 2.5.

In the embodiments, a mixed solution with a pH value in the above-described range is highly acidic and thus can inhibit hydrolysis and precipitation of ferrous ions and titanium ions, thereby ensuring that the ferrous ions and the titanium ions can form a uniformly mixed co-precipitate during subsequent preparation.

In the embodiments, the pH value of the first slurry is controlled to be 2.0 to 2.5, which facilitates to control the ferrous ions and the titanium ions to have a relatively low precipitation rate, such that the ferrous phosphate precipitate and the titanium phosphate precipitate have smaller and more uniform particle sizes and can be fully mixed during the precipitation. As such, during the subsequent deposition, titanium can be evenly doped into the iron phosphate precipitate.

In the embodiments, the pH value of the first slurry is controlled to be 2.0 to 2.5, which can control the conversion rate of ferrous ions into iron ions and the precipitation rate of iron ions to be relatively moderate, thereby being conducive to *in-situ* doping of titanium into the formed iron phosphate precipitate during iron precipitation. Moreover, in an actual preparation process, when the pH value is excessively high, impurities such as magnesium ions and potassium ions may be mixed into the iron phosphate material, which may have a negative impact on powder resistance and discharge efficiency of the final cathode material.

In some embodiments of the present application, the aging step includes: heating the mixture of the filter cake and the phosphoric acid solution to 85°C to 98°C; and/or
in the step of mixing the filter cake with the phosphoric acid solution, a ratio of an amount of substance of phosphoric acid in the phosphoric acid solution to an amount of substance of the phosphate salt in the mixture is (0.1 to 0.2):1.

In the embodiments, the iron phosphate precipitate is dispersed in the phosphoric acid solution and then heated to 85°C to 98°C, such that the iron phosphate re-nucleates and grows after dissolution, and a yellow amorphous iron phosphate precipitate can be fully converted into white iron phosphate dihydrate crystals.

In the embodiments, the ratio of the amount of substance of phosphoric acid to the amount of substance of the phosphate salt in the mixture is controlled within the above-described range, which can allow the iron phosphate precipitate to fully dissolve while reducing or even avoiding anionic impurities introduced by phosphoric acid. Moreover, when the ratio of the amount of substance of phosphoric acid in the phosphoric acid solution to the amount of substance of the phosphate salt in the mixture is within the above-described range, crystal form transformation can advantageously occur and be fully carried out.

In some embodiments of the present application, the calcination step includes: calcining the dried material at a temperature of 600°C to 800°C for 2 h to 3 h to form the iron phosphate material.

In the embodiments, the calcination is carried out in the above-described temperature range and for the above-described heating time, which can fully remove crystal water from crystals and facilitate iron phosphate to re-nucleate and grow and form a stacked sheet structure by splitting on the surfaces of the particles during the growth.

In a third aspect, the present application further provides a cathode material, wherein a raw material for the cathode material includes the iron phosphate material as described in any one of the above embodiments, or a raw material for the cathode material includes the iron phosphate material prepared by the method as described in any one of the above embodiments.

In the embodiments, the iron phosphate material has a stacked sheet structure and has a relatively large specific surface area. Correspondingly, the cathode material prepared with the iron phosphate material as a raw material also has a relatively large contact area and relatively low internal resistance, and the doped titanium ions are conducive to broadening an ion channel in the cathode material.

In some embodiments of the present application, the cathode material includes one or both of lithium iron phosphate and lithium manganese iron phosphate.

In a fourth aspect, the present application further provides a cathode plate. The cathode plate includes a current collector and a cathode active layer disposed on the current collector, and the cathode active layer includes the cathode material as described in any one of the above embodiments.

In the embodiments, the cathode plate includes the above-described cathode material, and thus the cathode material has a relatively large contact area and relatively low internal resistance, such that the cathode plate also has relatively good charge-discharge performance.

In a fifth aspect, the present application further provides a secondary battery. The secondary battery includes a cathode plate and an anode plate, and the cathode plate of the secondary battery is the cathode plate as described in any one of the above embodiments.

In the embodiments, the secondary battery including the above-described cathode plate can exhibit high charge-discharge efficiency and cycling stability during charge-discharge.

The foregoing description is merely an overview of the technical solutions in the present application. In order to relatively good understand the technical means in the present application, to achieve implementation according to content of the specification, and to make the above and other objects, features and advantages in the present application more obvious and easier to understand, the following describes specific implementations of the present application.

### BRIEF DESCRIPTION OF THE DRAWINGS

In order to illustrate the technical solution of the present application more clearly, the accompanying drawings used in the present application will be briefly introduced below. Obviously, the accompanying drawings described below are only some embodiments of the present application. For those of ordinary skill in the art, other accompanying drawings can be obtained based on these accompanying drawings without creative efforts.
FIG. 1 is a schematic diagram of steps of a method for preparing an iron phosphate material according to the present application.
FIG. 2 is a schematic flowchart of a preparation process for the iron phosphate material according to the present application.
FIG. 3 is a surface morphology diagram of an iron phosphate material prepared according to Example 1.
FIG. 4 is a surface morphology diagram of an iron phosphate material prepared according to Comparative Example 1.
FIG. 5 is an X-ray diffraction test result diagram of the iron phosphate materials prepared according to Example 1 and Comparative Example 1.

### DETAILED DESCRIPTION

Embodiments of technical solutions of the present application will be described in detail below with reference to the accompanying drawings. The following embodiments are merely for describing the technical solutions of the present application more clear and therefore are only illustrative and are not intended to limit the present application.

Unless otherwise defined, all technical and scientific terms used herein shall have the same meanings as commonly understood by those skilled in the art to which the present application belongs. The terms used herein are intended to merely describe specific embodiments rather than to limit the present application. The terms "include/comprise" and "have" and any other variations thereof in the specification, claims, and brief description of drawings of the present application are intended to cover non-exclusive inclusions.

In the description of the embodiments of the present application, the terms "first", "second" and the like are merely intended to distinguish different objects, and shall not be understood as an indication or implication of relative importance or implicit indication of the number, specific sequence or dominant-subordinate relationship of the technical features indicated. In the description of the embodiments of the present application, "a plurality of" means two or more than two, unless otherwise specifically stated.

The term "embodiment" described herein means that specific features, structures, or characteristics described in combination with the embodiments may be incorporated in at least one embodiment of the present application. The phase appearing in various places in the specification does not necessarily refer to the same embodiment or an independent or alternative embodiment that is exclusive of other embodiments. It is explicitly or implicitly understood by those skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: alone A, both A and B, and alone B. In addition, the character "/" in this specification generally indicates an "or" relationship between contextually associated objects.

In the description of the embodiments of the present application, the term "a plurality of' means more than two (including two). Similarly, "a plurality of groups" means more than two groups (including two groups), and "a plurality of sheets" means more than two sheets (including two sheets).

In the description of the embodiments of the present application, the orientation or position relationships indicated by the technical terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In the description of the embodiments of the present application, unless otherwise clearly specified and defined, the terms "installed", "connected", "coupled", "fixed" and the like should be understood broadly. For example, an element, when being referred to as being "installed", "connected", "coupled", or "fixed" to another element, unless otherwise specifically defined, may be fixedly connected, detachably connected, or integrated to the other element, may be mechanical connected or electrically connected to the other element, and may be directly connected to the other element, or connected to the other element via an intermediate medium, or may be internal communication between two elements or interaction between two elements. For those skilled in the art, the specific meanings of the above terms in the present application can be understood according to specific circumstances.

As analyzed in background of the present application, the primary particles of the iron phosphate material in the conventional art are mostly spherical or sheet-shaped and have relatively low actual specific surface areas, which limits the improvement of the specific surface area and contact area of the prepared cathode material.

In order to alleviate the above problem, an embodiment of the present application provides an iron phosphate material. The iron phosphate material is doped with titanium, and at least part of surfaces of primary particles of the iron phosphate material are in stacked sheet structures. The stacked sheet structure has a plurality of sheet layers, and any two adjacent sheet layers are respectively located on opposite sides of each other in a stacking direction. The stacking direction intersects an extending direction of the sheet layer.

In the embodiment, the iron phosphate material is doped with titanium, and the titanium causes defects generated in the iron phosphate material during crystallization, which hinders growth of the iron phosphate in a specific direction, thereby being conducive to forming the stacked sheet structure on surfaces of iron phosphate particles. The surfaces of the primary particles of the iron phosphate material have the stacked sheet structures. Any two adjacent sheet layers in the plurality of sheet layers of the stacked sheet structures are respectively located on opposite sides of each other in a stacking direction. Different from the conventional disorderedly distributed sheet-shaped iron phosphate material, the stacked sheet structure forms a short-range orderly morphology, which prevents a waste of space caused by horizontal and vertical interleaving of the sheet layers, thereby significantly increasing the specific surface area and contact area of the primary particles. In addition, since an ionic radius of titanium ions is smaller than that of iron ions, an ion channel at a site occupied by the titanium ions is broadened, which is conducive to improving ion migration efficiency for the prepared cathode material during charge and discharge.

It may be understood that the primary particle refers to a single minimum particle formed directly during chemical synthesis. A plurality of primary particles may form a secondary particle after agglomeration. The stacked sheet structure in the embodiments of the present application is directly formed on the surfaces of the particles during the synthesis, such that a part of the structure in the primary particle serves as the stacked sheet structure.

In the embodiments, "any two adjacent sheet layers are respectively located on opposite sides of each other in a stacking direction" means that in any two adjacent sheet layers, a first sheet layer is located on one side of a second sheet layer in the stacking direction, and the second sheet layer is also located on one side of the first sheet layer in the stacking direction. The stacking direction and the extending direction of the sheet layer may intersect perpendicularly or obliquely.

As an example of the embodiments, the surfaces of the primary particles of the iron phosphate material are split into the stacked sheet structure. Doped titanium causes defects generated in a crystal structure of iron phosphate, and growth of the crystal structure of iron phosphate in a specific direction is hindered, such that the surfaces can be split to form the stacked sheet structure.

In the example, the connection between a stacked sheet structure formed by splitting of the surfaces of the primary particles and a substrate where it is located is more stable, which facilitates to maintain structural integrity during subsequent processing, thereby enabling to remain a more stable iron phosphate material structure during subsequent processing and charge-discharge processes.

As an example of the embodiment, a surface of a single primary particle of the iron phosphate material has a plurality of stacked sheet structures.

In the example, the plurality of stacked sheet structures can further increase the specific surface area and the contact area of the single primary particle, which facilitates to further improve charge-discharge performance of the prepared cathode material.

It may be understood that in other examples, the surface of the single primary particle of the iron phosphate material may alternatively have only one stacked sheet structure. Further, although not explicitly defined or illustrated, in other examples, in addition to having the orderly stacked sheet structure, the surfaces of the primary particles of the iron phosphate material may have one or more disorderly distributed sheet structures or have a plurality of sheet structures that are orderly distributed in other manners.

As an example of the embodiments, in each stacked sheet structure, a number of the sheet layers is 2 to 4. For example, in the stacked sheet structure, the number of the sheet layers may be 2, 3, or 4; or the number of the sheet layers may be a value between any two of the above numbers.

In the example, the stacked sheet structure is provided with 2 to 4 sheet layers, which facilitates to take into account a relatively large specific surface area and the stability of the single stacked sheet structure.

As an example of the embodiments, a particle size of the single primary particle ranges from 300 nm to 1000 nm. For example, the particle size of the single primary particle is 300 nm, 400 nm, 500 nm, 600 nm, 700 nm, 800 nm, 900 nm, or 1000 nm; or the particle size of the single primary particle may be a value between any two of the above particle sizes.

In the example, the particle size of the single primary particle is within the above-described range, which facilitates to form a stacked sheet structure with relatively large size and spacing on the surface of the single primary particle, thereby producing relatively large specific surface area and contact area.

As an example of the embodiments, in the stacked sheet structure, a thickness of each sheet layer ranges from 40 nm to 60 nm. For example, the thickness of each sheet layer may be 40 nm, 42 nm, 45 nm, 47 nm, 50 nm, 52 nm, 55 nm, 57 nm, or 60 nm; or the thickness of each sheet layer may be a value between any two of the above thicknesses.

It may be understood that in the embodiments, two adjacent sheet layers may be completely spaced or at least partially spaced. "Completely spaced" means that there is no contact region between two adjacent sheet layers. "At least partially spaced" means that some regions of two adjacent sheet layers are in contact, and other regions are spaced apart to form a gap.

As an example of the embodiments, a spacing between two adjacent sheet layers on a side close to the substrate is smaller than a spacing between two adjacent sheet layers on a side away from the substrate.

As an example of the embodiments, in the stacking direction, a maximum spacing between two adjacent sheet layers ranges from 20 nm to 50 nm. For example, the maximum spacing between two adjacent sheet layers is 20 nm, 25 nm, 30 nm, 35 nm, 40 nm, 45 nm, or 50 nm; or the maximum spacing between two adjacent sheet layers may be a value between any two of the above spacings. It may be understood that the gap between two adjacent sheet layers in the stacking direction may be uneven, that is, some regions have relatively large spacing and some regions have relatively small spacing. The maximum spacing refers to a maximum distance of the gap between two adjacent sheet layers in the stacking direction.

In the example, the thickness of the sheet layer and the maximum spacing between two adjacent sheet layers are within the above-described ranges, which facilitates the iron phosphate material to have relatively high structural stability and a relatively large specific surface area.

As an example of the embodiments, the iron phosphate material is represented by a chemical formula of Fe₍₁₋ₙ₎Ti_{0.75n}PO₄, where 0.02≤n≤0.04. For example, in the chemical formula of the iron phosphate material, n may be 0.02, 0.022, 0.024, 0.026, 0.028, 0.03, 0.032, 0.034, 0.036, 0.038, or 0.04; or n may be a value between any two of the above values.

In the example, the iron phosphate material with the chemical formula has a more regular crystal lattice structure and a relatively high degree of crystallization, which ensures integrity of crystal lattices of the prepared cathode material, such that the cathode material has relatively good ion mobility.

As a further example of the embodiments, in the iron phosphate material, a mass content of titanium ranges from 4000 ppm to 10000 ppm. For example, the mass content of titanium may be 4000 ppm, 5000 ppm, 6000 ppm, 7000 ppm, 8000 ppm, 9000 ppm, or 10000 ppm; or the mass content of titanium may be a value between any two of the above mass content values.

In the example, when the mass content of titanium is within the above-described range, it is conducive to significantly increasing the specific surface area of the iron phosphate material while minimizing the negative impact on charge and discharge capacities caused by introduction of titanium.

As a further example of the embodiments, a ratio of iron to phosphorus of the iron phosphate material ranges from 0.94 to 0.98. A mass content of iron in the iron phosphate material ranges from 35.8% to 36.4%. A mass content of phosphorus in the iron phosphate material ranges from 20.58% to 20.64%.

The higher the content of titanium in the iron phosphate material, the lower the ratio of iron to phosphorus. When the ratio of iron to phosphorus in the iron phosphate material is controlled to be in the range of 0.94 to 0.98 and the content of iron and the content of phosphorus are within the above-described range, the iron phosphate material is more conducive to being used as a precursor material for the cathode material and the prepared cathode material is ensured to have relatively good charge-discharge performance. The ratio of iron to phosphorus in the iron phosphate material is the ratio of the amount of substance of iron to the amount of substance of phosphorus in the iron phosphate material.

As an example of the embodiments, a specific surface area of the iron phosphate material ranges from 9.4 m²/g to 14 m²/g. For example, the specific surface area of the iron phosphate material is 9.4 m²/g, 9.5 m²/g, 9.6 m²/g, 9.8 m²/g, 10 m²/g, 10.5 m²/g, 11 m²/g, 11.5 m²/g, 12 m²/g, 12.5 m²/g, 13 m²/g, 13.5 m²/g, or 14 m²/g; or the specific surface area of the iron phosphate material may be a value between any two of the above specific surface areas.

In the embodiments, the iron phosphate material with the above specific surface area is conducive to preparing a cathode material having relatively good charge-discharge performance.

As an example of the embodiments, a D50 particle size of the iron phosphate material ranges from 30 µm to 60 µm. For example, the D50 particle size of the iron phosphate material may be 30 µm, 35 µm, 40 µm, 45 µm, 50 µm, 55 µm, or 60 µm; or the D50 particle size of the iron phosphate material may be a value between any two of the above particle sizes.

The D50 particle size refers to a corresponding particle size when cumulative particle size distribution of the iron phosphate material reaches 50%, and a physical meaning thereof is that particles whose particle sizes are less than the value account for 50% of the total particles. The D50 particle size may be measured by a laser particle size analyzer.

In the example, the iron phosphate material with the above particle size is conducive to improving electrochemical performance of the prepared cathode material.

As an example of the embodiments, a tap density of the iron phosphate material ranges from 0.9 g/cm³ to 1.05 g/cm³. For example, the tap density of the iron phosphate material may be 0.9 g/cm³, 0.92 g/cm³, 0.94 g/cm³, 0.96 g/cm³, 0.98 g/cm³, 1 g/cm³, 1.02 g/cm³, 1.04 g/cm³, or 1.05 g/cm³; or the tap density of the iron phosphate material may be a value between any two of the above tap density values.

In the example, the iron phosphate material with the above tap density has a relatively large specific surface area, which is conducive to increasing the compaction density of the prepared cathode material.

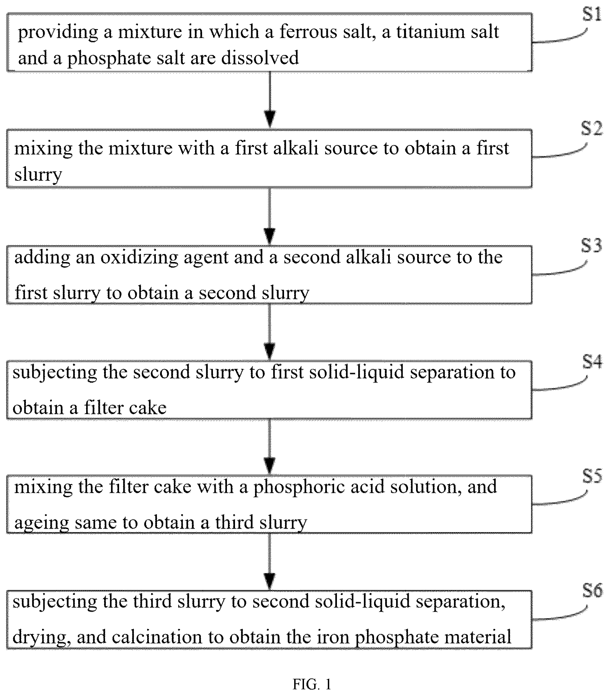

In a second aspect, the present application further provides a method for preparing an iron phosphate material. FIG. 1 is a schematic diagram of steps of the method for preparing the iron phosphate material. Referring to FIG. 1, the preparation method includes step S1 to step S6 as follows.

In step S1, a mixture in which a ferrous salt, a titanium salt and a phosphate salt are dissolved is provided.

As an example of the embodiments, the ferrous salt is selected from salts that can be dissolved in water and ionize ferrous ions. For example, the ferrous salt may be selected from, but is not limited to, any one or more of ferrous sulfate, ferrous chloride, or ferrous oxalate. The ferrous salt has good solubility and a low material cost. The anions in the ferrous salt are easily removed from the surface of the subsequently formed iron phosphate and have fewer residues, which facilitates to ensure purity of the iron phosphate material.

As an example of the embodiments, the titanium salt is selected from salts that can be dissolved in water and ionize titanium ions. For example, the titanium salt may be selected from, but is not limited to, either or both of titanyl sulfate and titanium tetrachloride. The titanium salt has good solubility. The anions in the titanium salt are easily removed from the surface of the subsequently formed iron phosphate and have fewer residues, which facilitates to ensure purity of the iron phosphate material.

As an example of the embodiments, the titanium salt may alternatively be from filtrate obtained by filtering a mixture of ilmenite and concentrated sulfuric acid. A mass fraction of titanium in the filtrate ranges from 7% to 10%, and a mass fraction of sulfate ions ranges from 40% to 50%. For example, the mass fraction of titanium may be 7.5%, 8%, 8.5%, 9%, 9.5%, or any value ranged from 7% to 10%; and the mass fraction of sulfate ions is 42%, 45%, 46%, 48%, or any value ranged from 40% to 50%. A mass fraction of H₂SO₄ in the concentrated sulfuric acid may range from 50% to 60%, for example, 52%, 54%, 55%, 56%, 58%, or any value ranged from 50% to 60%.

As a further example of the embodiments, the titanium salt may alternatively be from a filtrate which is obtained by filtering a mixture of ilmenite and concentrated sulfuric acid. The filtrate further includes iron and other impurity elements, in which a mass fraction of iron ranges from 3% to 4% such as 3.1%, 3.25%, 3.35%, 3.5%, 3.65%, or 3.95%, the impurity elements include Al, Ca, Cd, Co, Cr, Cu, K, Mg, Mn, Na, Ni, Pb, and Zn, and contents of impurity elements do not exceed 5000 ppm.

As an example of the embodiments, the phosphate salt may be selected from, but is not limited to, one or more of diammonium hydrogen phosphate, ammonium dihydrogen phosphate, and sodium hydrogen phosphate. The phosphate salt has good solubility. The cations in the phosphate salt are easily removed from the surface of the subsequently formed iron phosphate and have fewer residues, which facilitates to ensure purity of the iron phosphate material.

As an example of the embodiments, in the mixture, a ratio of the amount of substance of iron to the amount of substance of titanium is 1: (0.015 to 0.03). For example, the ratio of the amount of substance of iron to the amount of substance of titanium may be 1:0.015, 1:0.016, 1:0.018, 1:0.02, 1:0.022, 1:0.024, 1:0.026, 1:0.028, or 1:0.03; or the ratio of the amount of substance of iron to the amount of substance of titanium may be a value between any two of the above ratios.

In the example, the above-described ratio of iron to titanium is selected to be conducive to ensuring that the formed iron phosphate has a good crystal lattice structure during subsequent deposition, and titanium can also be fully doped into iron phosphate, which further facilitates to form a relatively good stacked sheet structure on the surfaces of the iron phosphate particles by splitting.

As an example of the embodiments, in the mixture, a ratio of the amount of substance of iron to the amount of substance of phosphorus is 1: (0.97 to 1.07). For example, the ratio of the amount of substance of iron to the amount of substance of phosphorus may be 1:0.97, 1:0.98, 1:0.99, 1:1, 1:1.01, 1:1.02, 1:1.03, 1:1.05, or 1:1.07; or the ratio of the amount of substance of iron to the amount of substance of phosphorus may be a value between any two of the above ratios.

In the example, the above-described ratio of iron to phosphorus is selected, which facilitates to ensure sufficient precipitation of iron and titanium during the subsequent deposition, thereby improving utilization of iron and titanium.

As an example of the embodiments, the amount of substance of phosphorus may be correspondingly selected according to the amount of substance of titanium. For example, when the amount of substance of titanium is relatively high, the amount of substance of phosphorus may also be relatively high; and when the amount of substance of titanium is relatively low, the amount of substance of phosphorus may also be relatively low.

As an example of the embodiments, a pH value of the mixture may be 0.5 to 1.5, which ensures that iron and titanium can exist stably in an aqueous solution. For example, the pH value of the mixture may be 0.5, 0.6, 0.7, 0.8, 0.9, 1.0, 1.1, 1.2, 1.3, 1.4, or 1.5; or the pH value of the mixture may be a value between any two of the above pH values.

It may be understood that different salt solutions may have different pH values, such that when the mixture is formed, a pH regulator may be added to the mixture to control the pH value thereof. The pH regulator may be selected from, but is not limited to, one or more of sulfuric acid, hydrochloric acid, sodium hydroxide, or aqueous ammonia.

In step S2, the mixture is mixed with a first alkali source to obtain a first slurry.

In the embodiments, adding the first alkali source is to precipitate ferrous ions and titanium ions, thereby forming the first slurry with a ferrous phosphate precipitate and a titanium phosphate precipitate.

It may be understood that the first alkali source is used to regulate a pH value of the first slurry obtained with the mixture, and an amount of the first alkali source may be correspondingly selected according to the required pH value. As an example of the embodiments, after adding the first alkali source to the first mixture, the pH value of the formed first slurry is controlled to be 2.0 to 2.5 to form the ferrous phosphate precipitate and the titanium phosphate precipitate. For example, the pH value of the first slurry may be controlled to be 2.0, 2.1, 2.2, 2.3, 2.4, or 2.5; or the pH value of the first slurry may be controlled between any two of the above pH values.

In the example, the pH value of the first slurry is controlled to be 2.0 to 2.5, which facilitates to ensure a relatively low precipitation rate for the ferrous ions and the titanium ions, such that the ferrous phosphate precipitate and the titanium phosphate precipitate have smaller and more uniform particle sizes and can be fully mixed during the precipitation. Next, during the subsequent deposition, titanium can be evenly doped into the iron phosphate precipitate. Moreover, in an actual preparation process, when the pH value is excessively high, impurities such as magnesium ions and potassium ions may be mixed into the iron phosphate material, which may have a negative impact on powder resistance and discharge efficiency of the final cathode material.

It may be understood that the pH value of the obtained first slurry may be controlled by controlling the added amount of the first alkali source.

As an example of the embodiments, an alkaline substance in the first alkali source may be selected from, but is not limited to, one or more of aqueous ammonia, sodium hydroxide, sodium carbonate, or sodium bicarbonate. Cations of the alkaline substance are easily removed from the surface of the subsequently formed iron phosphate and have fewer residues, which facilitates to ensure purity of the iron phosphate material.

As an example of the embodiments, the ferrous phosphate precipitate may be ferrous dihydrogen phosphate.

In the embodiments, a co-precipitate of ferrous ions and titanium ions is formed before oxidation, which can enable a titanium-doped iron phosphate precipitate to form more smoothly, thereby preventing locally excessively quick formation of iron phosphate precipitates caused by subsequent excessive addition of the second alkali source due to an excessively low pH value of the mixture, and preventing titanium from being difficult to be uniformly incorporated.

In step S3, an oxidizing agent and a second alkali source are added to the first slurry to obtain a second slurry.

In the embodiments, the oxidizing agent is used to oxidize the ferrous phosphate precipitate in the first slurry, thereby forming a titanium-doped iron phosphate precipitate.

It may be understood that the second alkali source is used to regulate a pH value of the first slurry during oxidation and precipitation, and an amount of the second alkali source added to the first slurry may be correspondingly selected according to the required pH value. As an example of the embodiments, during adding the oxidizing agent and the second alkali source to the first slurry, the pH value is controlled to be 2.0 to 2.5. For example, during adding the oxidizing agent and the second alkali source to the first slurry, the pH value may be controlled to be 2.0, 2.1, 2.2, 2.3, 2.4, or 2.5; or during adding the oxidizing agent and the second alkali source to the first slurry, the pH value may be controlled between any two of the above pH values.

As a reaction between the oxidizing agent and the ferrous phosphate proceeds, the reaction product may cause the pH value of the first slurry to gradually reduce. The added second alkali source can be used to maintain the pH value during adding the oxidizing agent and the second alkali source to the first slurry, thereby ensuring complete precipitation of iron.

In the example, during adding the oxidizing agent and the second alkali source to the first slurry, the pH value is controlled to be 2.0 to 2.5, which facilitates to control the conversion rate of ferrous ions into iron ions and the precipitation rate of the iron ions to be relatively moderate, thereby being conducive to *in-situ* doping titanium into the formed iron phosphate precipitate during iron precipitation. Moreover, in an actual preparation process, when the pH value is excessively high, impurities such as magnesium ions and potassium ions may be mixed into the iron phosphate material, which may have a negative impact on powder resistance and discharge efficiency of the final cathode material.

As an example of the embodiments, the oxidizing agent is selected from a hydrogen peroxide solution. Water is the only oxidation product of the hydrogen peroxide solution, such that the selection of the hydrogen peroxide solution as the oxidizing agent may basically not lead to mixing of impurity elements into the iron phosphate precipitate, which facilitates to obtain a relatively pure iron phosphate precipitate.

As a further example of the embodiments, a mass fraction of hydrogen peroxide in the hydrogen peroxide solution ranges from 15% to 30%.

As a further example of the embodiments, during adding the oxidizing agent and the second alkali source to the first slurry, a ratio of an amount of substance of hydrogen peroxide in the hydrogen peroxide solution to an amount of substance of ferrous ions in the mixture is (0.55 to 0.75):1. For example, the ratio of the amount of substance of hydrogen peroxide to the amount of substance of the ferrous ions may be 0.55:1, 0.57:1, 0.6:1, 0.62:1, 0.65:1, 0.67:1, 0.7:1, 0.72:1, or 0.75:1; or the ratio of the amount of substance of hydrogen peroxide to the amount of substance of the ferrous ions may be a value between any two of the above ratios.

In the example, although an excessive amount of the hydrogen peroxide solution may not affect composition and morphology of the obtained iron phosphate material, some raw materials may be wasted. When the amount of the hydrogen peroxide solution is too small, the oxidation reaction is not sufficient, and the purity of the obtained iron phosphate material may be low, thereby further affecting the quality of the subsequently prepared cathode material.

As an example of the embodiments, the oxidizing agent is selected from oxygen gas or compressed air.

As a further example of the embodiments, during adding the oxidizing agent and the second alkali source to the first slurry, a ratio of an amount of substance of added oxygen gas to an amount of substance of ferrous ions in the mixture is (0.275 to 0.375):1. For example, the ratio of the amount of substance of the added oxygen gas to the amount of substance of the ferrous ions in the mixture may be 0.285:1, 0.295:1, 0.305:1, 0.315:1, 0.325:1, 0.335:1, 0.345:1, 0.355:1, 0.365:1, or any ratio in the range of (0.275 to 0.375):1.

As a further example of the embodiments, during adding the oxidizing agent and the second alkali source to the first slurry, a ratio of an amount of substance of oxygen gas in the compressed air to the amount of substance of the ferrous ions in the mixture is (0.275 to 0.375):1. For example, the ratio of the amount of substance of oxygen gas in the added compressed air to the amount of substance of the ferrous ions in the mixture may be 0.285:1, 0.295:1, 0.305:1, 0.315:1, 0.325:1, 0.335:1, 0.345:1, 0.355:1, 0.365:1, or any ratio in the range of (0.275 to 0.375):1.

In the example, since the oxygen gas and the compressed air are gases, when the oxygen gas or the compressed air is selected as the oxidizing agent, mixing of impurity elements into the iron phosphate precipitate is prevented, which facilitates to obtain a relatively pure iron phosphate precipitate. Correspondingly, the ratio of the amount of the oxygen gas to the amount of substance of the ferrous ions or a ratio of the amount of oxygen gas in the compressed air to the amount of substance of the ferrous ions is controlled within the corresponding range, which is conducive to fully oxidizing the ferrous ions.

As an example of the embodiments, an alkaline substance in the second alkali source may be selected from, but is not limited to, one or more of aqueous ammonia, sodium hydroxide, sodium carbonate, or sodium bicarbonate. Cations of the alkaline substance are easily removed from the surface of the subsequently formed iron phosphate and have fewer residues, which facilitates to ensure purity of the iron phosphate material.

As a further example of the embodiments, the second alkali source is the same as the first alkali source. Using the same first alkali source and second alkali source can avoid introducing a variety of different cations as much as possible, which facilitates to ensure the purity of the iron phosphate material.

As an example of the embodiments, a total time for the process of adding the oxidizing agent and the second alkali source to the first slurry is 20 min to 60 min. For example, the total time for the process of adding the oxidizing agent and the second alkali source may be 20 min, 25 min, 30 min, 35 min, 40 min, 45 min, 50 min, 55 min, 65 min; or the total time may be a value between any two of the above values.

In the example, the total time for adding the oxidizing agent and the second alkali source is controlled within the above-described range, which is conducive to controlling the iron phosphate precipitate to form more smoothly and facilitates to improve uniform distribution of titanium in the iron phosphate precipitate.

As a further example of the embodiments, after completion of the addition of the oxidizing agent and the second alkali source, the first slurry may be continuously stirred for 30 min to 240 min. The continuous stirring is for fully reacting to form the iron phosphate precipitate.

In step S4, the second slurry is subjected to first solid-liquid separation to obtain a filter cake.

As an example of the embodiments, the second slurry may be subjected to the first solid-liquid separation by filtering.

As an example of the embodiments, after subjecting the second slurry to the first solid-liquid separation, the method further includes a step of performing a first rinsing treatment to the iron phosphate precipitate.

In the example, the first rinsing treatment is configured to remove anionic and cationic impurities attached to the surface of the iron phosphate precipitate to obtain a purer iron phosphate precipitate and reduce impurities inside subsequently formed iron phosphate dihydrate crystals, thereby improving quality of the crystals.

As a further example of the embodiments, the step of performing the first rinsing treatment to the iron phosphate precipitate includes: rinsing the iron phosphate precipitate with flowing pure water, monitoring the conductivity of rinsing outflow water, and stopping the first rinsing treatment when the conductivity of the rinsing outflow water is lower than a first preset conductivity value. The first preset conductivity value may be set according to an actual requirement.

As a further example of the embodiments, the first preset conductivity value may be 2 mS/cm to 10 mS/cm. For example, the first preset conductivity value may be 2 mS/cm, 3 mS/cm, 4 mS/cm, 5 mS/cm, 6 mS/cm, 7 mS/cm, 8 mS/cm, 9 mS/cm, or 10 mS/cm; or the first preset conductivity value may be a value between any two of the above conductivity values.

In step S5, the filter cake is mixed with a phosphoric acid solution and an aging treatment is performed to obtain a third slurry.

In the embodiments, after mixing the filter cake with the phosphoric acid solution, the iron phosphate precipitate in the filter cake is dissolved in the phosphoric acid solution, and the subsequent aging treatment is configured to recrystallize the iron phosphate in the solution to form iron phosphate dihydrate crystals.

As an example of the embodiments, the step of aging treatment includes: heating the mixture of the filter cake and the phosphoric acid solution to 85°C to 98°C to form the iron phosphate dihydrate crystals. In some examples, the mixture of the filter cake and the phosphoric acid solution may be heated to 85°C, 86°C, 87°C, 88°C, 90°C, 92°C, 94°C, 95°C, 96°C, 97°C, or 98°C; or the mixture of the filter cake and the phosphoric acid solution may be heated to a temperature between any two of the above temperatures.

In the example, the iron phosphate precipitate is dispersed in the phosphoric acid solution and then heated, such that the iron phosphate re-nucleates and grows after dissolution, and a yellow amorphous iron phosphate precipitate can be fully converted into white iron phosphate dihydrate crystals. Moreover, impurity ions attached to the surface of the amorphous iron phosphate can also be reduced by dissolving in the phosphoric acid solution.

As a further example of the embodiments, after the mixture of the filter cake and the phosphoric acid solution is heated to 85°C to 98°C, the temperature is kept for 3 h to 5 h.

As an example of the embodiments, in the phosphoric acid solution, a ratio of an amount of substance of phosphoric acid to an amount of substance of the phosphate salt in the mixture is (0.1 to 0.2):1. For example, the ratio of the amount of substance of the phosphoric acid to the amount of substance of the phosphate salt in the mixture may be 0.1:1, 0.11:1, 0.12:1, 0.13:1, 0.14:1, 0.15:1, 0.16:1, 0.18:1; or 0.2:1, or the ratio of the amount of substance of the phosphoric acid to the amount of substance of the phosphate salt in the mixture may be a value between any two of the above ratios. It may be understood that phosphate ions of the phosphate salt in the mixture are almost completely transferred to the iron phosphate.

In the example, the ratio of the amount of substance of phosphoric acid to the amount of substance of the phosphate salt in the mixture is controlled within the above-described range, which can allow the iron phosphate precipitate to fully dissolve while reducing or even avoiding anionic impurities introduced by phosphoric acid. Moreover, when the ratio of the amount of substance of phosphoric acid in the phosphoric acid solution to the amount of substance of the phosphate salt in the mixture is within the above-described range, crystal transformation can advantageously occur and be fully carried out.

As a further example of the embodiments, a pH value of the third slurry may be 1.0 to 2.0, which to ensure that the iron phosphate can be completely dissolved at normal temperature. For example, the pH value of the third slurry may be 1.0, 1.1, 1.2, 1.3, 1.4, 1.5, 1.7, 1.9, or 2.0; or the pH value of the third slurry may be a value between any two of the above pH values.

In step S6, the third slurry is subjected to second solid-liquid separation, drying, and calcination to obtain the iron phosphate material.

In the embodiments, the third slurry is subjected to the second solid-liquid separation to obtain iron phosphate dihydrate crystals. After calcination, the iron phosphate dihydrate crystals can form the required iron phosphate material with a stacked sheet structure.

As an example of the embodiments, the third slurry is subjected to the second solid-liquid separation by filtering.

As an example of the embodiments, after subjecting the third slurry to second solid-liquid separation, the method further includes a step of performing a second rinsing treatment to the iron phosphate dihydrate crystals.

In the example, the second rinsing treatment is configured to remove anionic and cationic impurities attached to surfaces of the iron phosphate dihydrate crystals and prevent impact of impurity ions on the morphology of the iron phosphate material during subsequent calcination as much as possible.

As a further example of the embodiments, the step of performing the second rinsing treatment to the iron phosphate dihydrate crystals includes: rinsing the iron phosphate dihydrate crystals with flowing pure water, monitoring conductivity of rinsing outflow water, and stopping the second rinsing treatment when the conductivity of the rinsing outflow water is lower than a second preset conductivity value. The second preset conductivity value may be set according to an actual requirement.

As a further example of the embodiments, the second preset conductivity value may be 100 µS/cm to 500 µS/cm. For example, the first preset conductivity value may be 100 µS/cm, 150 µS/cm, 200 µS/cm, 250 µS/cm, 300 µS/cm, 350 µS/cm, 400 µS/cm, 450 µS/cm, or 500 µS/cm; or the second preset conductivity value may be a value between any two of the above conductivity values.

In the embodiments, the third slurry after the second solid-liquid separation is dried at a temperature ranged from 80°C to 140°C for a time ranged from 8 h to 16 h. For example, the drying temperature may be 85°C, 90°C, 92°C, 95°C, 96°C, 98°C, 100°C, 110°C, 120°C, 130°C, or any temperature ranged from 80°C to 140°C, and the drying time may be 9 h, 10 h, 12h, 15 h, or any duration time ranged from 8 h to 16 h. The drying may be carried out in an air atmosphere. Further, by mass fraction, a content of free water in the iron phosphate dihydrate crystals obtained after drying is below 1%. Free water is opposite to crystal water. The crystal water refers to water molecules that are bound to iron phosphate and form crystals together. The free water refers to water molecules that are not bound to iron phosphate and remain inside or on the surfaces of the iron phosphate dihydrate crystals.

As an example of the embodiments, the step of subjecting the iron phosphate dihydrate crystals to calcination includes: heating the iron phosphate dihydrate crystals at a temperature of 600°C to 800°C for 2 h or more than 2 h to form the iron phosphate material.

As a further example of the embodiments, a calcination temperature during the calcination may be 600°C, 620°C, 640°C, 650°C, 680°C, 700°C, 720°C, 740°C, 750°C, 780°C, or 800°C; or the calcination temperature during the calcination may be a value between any two of the above temperatures.

As a further example of the embodiments, a calcination time during the calcination may be 2 h to 3 h. For example, the calcination time may be 2 h, 2.1 h, 2.2 h, 2.3 h, 2.5 h, 2.7 h, 2.9 h, or 3 h; or the calcination time may be a value between any two of the above time.

As a further example of the embodiments, a temperature rising rate of the temperature rise to the calcination temperature during the calcination may be 3 °C/min to 8 °C/min, for example, 4 °C/min, 5 °C/min, 6 °C/min, 7 °C/min, or any temperature rising rate ranged from 3 °C/min to 8 °C/min.

As a further example of the embodiments, the calcination may be carried out in an air atmosphere.

In the example, the iron phosphate dihydrate crystals are calcinated in the above-described temperature range and for the above-described heating time, which can fully remove crystal water from the crystals and facilitate iron phosphate to re-nucleate and grow and form a stacked sheet structure by splitting on the surfaces of the particles during the growth.

Through the step S1 to step S6, the iron phosphate material in the present application can be prepared.

In the embodiments, a ferrous salt solution, a titanium salt solution, and a phosphate salt solution are pre-mixed. when the first alkali source is added, ferrous ions and titanium ions can co-precipitate to form a mixture of a ferrous phosphate precipitate and a titanium phosphate precipitate. Then, the oxidizing agent and the second alkali source are added, such that titanium ions can be doped into the iron phosphate precipitate *in situ* during the precipitation. Next, during the aging, the amorphous iron phosphate precipitate dissolves and recrystallizes into iron phosphate dihydrate crystals. During the calcination, titanium doped in iron phosphate causes defects in the crystal lattice and thus hinders growth thereof in a specific direction, rendering surfaces of the iron phosphate particles to split and form a plurality of sheets which are sequentially arranged and spaced at the top end, thereby forming a stacked sheet structure. The iron phosphate material in any one of the above embodiments can be prepared by the preparation method in the embodiments.

In a third aspect, another embodiment of the present application further provides a cathode material. A raw material for the cathode material includes the iron phosphate material as described in any one of the above embodiments, or a raw material for the cathode material includes an iron phosphate material prepared with the method as described in any one of the above embodiments.

In the embodiments, the iron phosphate material has a stacked sheet structure and a relatively large specific surface area. Correspondingly, the cathode material prepared with the iron phosphate material as a raw material also has a relatively large contact area and relatively low internal resistance, and the doped titanium ions are conducive to broadening an ion channel in the cathode material.

As an example of the embodiments, the cathode material includes either or both of lithium iron phosphate and lithium manganese iron phosphate.

In a fourth aspect, another embodiment of the present application further provides a cathode plate. The cathode plate includes a current collector and a cathode active layer disposed on the current collector. The cathode active layer includes the cathode material as described in any one of the above embodiments.

In the embodiments, the cathode plate includes the above-described cathode material, and thus the cathode material has a relatively large contact area and relatively low internal resistance, such that the cathode plate also has relatively good charge-discharge performance.

As an example of the embodiments, the cathode active layer may further include either or both of a conductive agent and a binder.

As a further example of the embodiments, in the cathode active layer, the conductive agent may be one or more selected from conductive carbon black, carbon nanotubes, graphene, and carbon nanofibers.

As a further example of the embodiments, in the cathode active layer, the binder may be one or more selected from polyvinylpyrrolidone, polyvinylidene fluoride, polyethylene oxide, polytetrafluoroethylene, carboxymethylcellulose, and a copolymer of styrene and butadiene.

In a fifth aspect, another embodiment of the present application further provides a secondary battery. The secondary battery includes a cathode plate and an anode plate. The cathode plate of the secondary battery is the cathode plate as described in the above embodiments.

In the embodiments, the secondary battery including the above-described cathode plate can exhibit high charge-discharge efficiency and cycling stability during charge and discharge.

As an example of the embodiments, the anode plate includes a current collector and an anode active layer disposed on the current collector, and the anode active layer includes an anode active material.

As a further example of the embodiments, the anode active material includes one or more of graphite, silicon, silicon carbon, metallic lithium, or lithium titanate.

As a further example of the embodiments, the anode active layer may further include either or both of a conductive agent and a binder.

As a further example of the embodiments, in the anode active layer, the conductive agent may be one or more selected from conductive carbon black, carbon nanotubes, graphene, and carbon nanofibers.

As a further example of the embodiments, in the anode active layer, the binder may be one or more selected from polyvinylpyrrolidone, polyvinylidene fluoride, polyethylene oxide, polytetrafluoroethylene, carboxymethylcellulose, and a copolymer of styrene and butadiene.

The present application is further described in detail below with reference to specific embodiments. The embodiments cannot be understood as limiting the scope sought for protection in the present application.

Unless otherwise defined, all technical terms used below have the same meanings as commonly understood by those skilled in the art. The technical terms used herein are only for the purpose of describing specific embodiments and are not intended to limit the protection scope of the present application.

Some specific embodiments are listed below. It should be noted that the embodiments described below are illustrative and are only used to explain the present application and cannot be understood as limiting the present application. If specific technologies or conditions are not specified in the embodiments, they are carried out in accordance with the technologies or conditions described in literature in the art or in accordance with product instructions. If the manufacturer of the reagents or instruments used is not indicated, they are all conventional products that can be purchased commercially.

### I. Preparation method

### Example 1

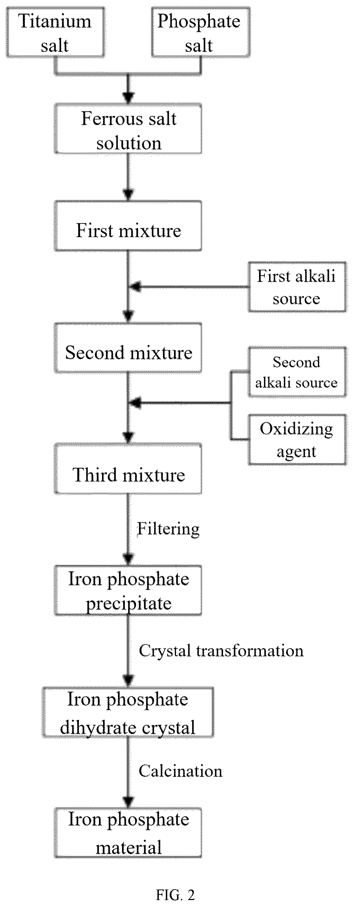

An anhydrous iron phosphate material is prepared using a process flow shown in FIG. 2, specifically as follows:
(1) A ferrous sulfate (FeSO₄) solution with a mass concentration of 191.77 g/kg and a pH value of 2.8 is taken, and a titanyl sulfate (TiOSO₄) powder and a diammonium hydrogen phosphate ((NH₄)₂HPO₄) powder are added thereto, stirred to fully dissolve the titanyl sulfate powder and the diammonium hydrogen phosphate powder, to obtain a mixture for later use. In the mixture, a ratio of amounts of substance of iron, phosphorus and titanium is 1:1.02:0.0225, and a pH value of the mixture is 1.4.
(2) Aqueous ammonia is added to the mixture, to increase the pH value of the first mixture to 2.20, such that ferrous ions and titanium ions are respectively converted into a ferrous dihydrogen phosphate precipitate and a titanium phosphate precipitate, to obtain a first slurry.
(3) A hydrogen peroxide solution and aqueous ammonia are gradually added to the first slurry, with an overall dripping time controlled to be 30 min. After the dripping is completed, the mixture is continuously stirred for 1 h to fully react to form a titanium-doped iron phosphate precipitate, thereby obtaining a second slurry. The pH value of the first slurry during the reaction and the pH value of the second slurry after the reaction are controlled to be 2.15. A ratio of an amount of substance of hydrogen peroxide in the hydrogen peroxide solution to an amount of substance of iron in step (1) is 0.65:1.
(4) The iron phosphate precipitate is filtered and then rinsed with pure water until the conductivity of rinsing outflow water falls below 5 mS/cm.
(5) The rinsed iron phosphate is transferred to a dilute phosphoric acid solution and then fully stirred. The dilute phosphoric acid solution is composed of pure water and concentrated phosphoric acid in a mass ratio of 93.4:1.85, and a mass concentration of phosphoric acid in the concentrated phosphoric acid is 75%. A ratio of an amount of substance of the phosphoric acid to an amount of substance of diammonium hydrogen phosphate in step (1) is 0.115:1, and a pH value of the formed slurry is 1.55. Next, the mixture is heated to 95°C and kept for 3 h, such that yellow amorphous iron phosphate is completely transformed into white iron phosphate dihydrate crystals, thereby obtaining a third slurry.
(6) The third slurry is filtered. Next, the iron phosphate dihydrate crystals are rinsed with pure water until the conductivity of rinsing outflow water falls below 200 µS/cm, and then are transferred to an oven at 95°C and dried in an air atmosphere for 12 h. After drying, a content of free water in the iron phosphate dihydrate crystals is less than 1 wt%.
(7) The iron phosphate dihydrate crystals are pulverized, then placed in a muffle furnace, heated to 600°C in an air atmosphere and kept at the temperature for 2 h for calcination, and then cooled naturally to form an iron phosphate material with a white and lightly yellow color.

### Example 2

(1) A ferrous chloride (FeCl₂) solution with a mass concentration of 160.01 /kg and a pH value of 2.8 is taken, and a filtrate with titanium in a mass fraction of 9.98% and an ammonium dihydrogen phosphate (NH₄H₂PO₄) powder are added thereto, stirred to fully dissolve the titanyl sulfate powder and the ammonium dihydrogen phosphate powder, to obtain a mixture for later use. The filtrate is obtained by filtering a mixture of ilmenite and concentrated sulfuric acid. In the mixture, a ratio of amounts of substance of iron, phosphorus and titanium is 1:1.03:0.03, and a pH value of the mixture is 0.9.
(2) A sodium hydroxide solution is added to the mixture, to increase the pH value of the mixture to 2.20, such that ferrous ions and titanium ions are respectively converted into a ferrous dihydrogen phosphate precipitate and a titanium phosphate precipitate, to obtain a first slurry.
(3) Compressed air and a sodium hydroxide solution are gradually added to the first slurry, with an overall dripping time controlled to be 30 min. After the dripping is completed, the mixture is continuously stirred for 1 h to fully react and form a titanium-doped iron phosphate precipitate, thereby obtaining a second slurry. The pH value of the first slurry during the reaction and the pH value of the second slurry after the reaction are controlled to be 2.15. A ratio of an amount of substance of oxygen gas in the added compressed air to an amount of substance of iron in step (1) is 0.325:1.
(4) The iron phosphate precipitate is filtered and then rinsed with pure water until the conductivity of rinsing outflow water falls below 5 mS/cm.
(5) The rinsed iron phosphate is transferred to a dilute phosphoric acid solution and then fully stirred. The dilute phosphoric acid solution is composed of pure water and concentrated phosphoric acid in a mass ratio of 93.4:1.85 and a mass concentration of phosphoric acid in the concentrated phosphoric acid is 75%. A ratio of an amount of substance of the phosphoric acid to an amount of substance of diammonium hydrogen phosphate in step (1) is 0.115:1, and a pH value of the formed slurry is 1.55. Next, the mixture is heated to 98°C and kept for 5 h, such that yellow amorphous iron phosphate is completely transformed into white iron phosphate dihydrate crystals, thereby obtaining a third slurry.
(6) The third slurry is filtered. Next, the iron phosphate dihydrate crystals are rinsed with pure water until the conductivity of rinsing outflow water falls below 200 µS/cm, and then are transferred to an oven at 100°C and dried in an air atmosphere for 8 h. After drying, a content of free water in the iron phosphate dihydrate crystals is less than 1 wt%.
(7) The iron phosphate dihydrate crystals are pulverized, then placed in a muffle furnace, heated to 800°C in an air atmosphere and kept at the temperature for 2 h for calcination, and then cooled naturally to form a iron phosphate material with a white and lightly yellow color.

### Example 3

An anhydrous iron phosphate material is prepared according to the method in Example 1, with the following differences.
(1) A ferrous sulfate (FeSO₄) solution with a mass concentration of 191.77 g/kg and a pH value of 2.8 is taken, and a titanium tetrachloride (TiCl₄) power and a diammonium hydrogen phosphate (Na₂HPO₄) powder are added thereto, stirred to fully dissolve the titanium tetrachloride powder and the diammonium hydrogen phosphate powder, to obtain a mixture for later use. In the mixture, a ratio of amounts of substance of iron, phosphorus and titanium is 1:1.01:0.015, and a pH value of the mixture is 1.4.
(2) Sodium carbonate is added to the mixture, to increase the pH value of the mixture to 2.20, such that ferrous ions and titanium ions are respectively converted into a ferrous dihydrogen phosphate precipitate and a titanium phosphate precipitate, to obtain a first slurry.
(3) A hydrogen peroxide solution and sodium carbonate are gradually added to the first slurry, with an overall dripping time controlled to be 30 min. After the dripping is completed, the mixture is continuously stirred for 1 h to fully react to form a titanium-doped iron phosphate precipitate, thereby obtaining a second slurry. The pH value of the first slurry during the reaction and the pH value of the second slurry after the reaction are controlled to be 2.15. A ratio of an amount of substance of hydrogen peroxide in the hydrogen peroxide solution to an amount of substance of iron in step (1) is 0.65:1.
(4) The iron phosphate precipitate is filtered and then rinsed with pure water until the conductivity of rinsing outflow water falls below 5 mS/cm.
(5) The rinsed iron phosphate is transferred to a dilute phosphoric acid solution and then fully stirred. The dilute phosphoric acid solution is composed of pure water and concentrated phosphoric acid in a mass ratio of 93.4:1.85 and a mass concentration of phosphoric acid in the concentrated phosphoric acid is 75%. A ratio of an amount of substance of the phosphoric acid to an amount of substance of diammonium hydrogen phosphate in step (1) is 0.115:1, and a pH value of the formed slurry is 1.55. Next, the mixture is heated to 98°C and kept for 5 h, such that yellow amorphous iron phosphate is completely transformed into white iron phosphate dihydrate crystals, thereby obtaining a third slurry.
(6) The third slurry is filtered. Next, the iron phosphate dihydrate crystals are rinsed with pure water until the conductivity of rinsing outflow water falls below 200 µS/cm, and then are transferred to an oven at 90°C and dried in an air atmosphere for 16 h. After drying, a content of free water in the iron phosphate dihydrate crystals is less than 1 wt%.
(7) The iron phosphate dihydrate crystals are pulverized, then placed in a muffle furnace, heated to 700°C in an air atmosphere and kept at the temperature for 3 h for calcination, and then cooled naturally to form an iron phosphate material with a white and lightly yellow color.

### Example 4

Anhydrous iron phosphate is prepared according to the method in Example 1, except that the ratio of amounts of substance of iron, phosphorus and titanium is 1:1.043:0.04.

### Example 5

Anhydrous iron phosphate is prepared according to the method in Example 1, except that the ratio of amounts of substance of iron, phosphorus and titanium is 1:0.997:0.01.

### Example 6

Anhydrous iron phosphate is prepared according to the method in Example 1, except that in step (2), the amount of the aqueous ammonia is increased to increase the pH value of the mixture to 3.0, thereby obtaining a first slurry.

### Example 7

Anhydrous iron phosphate is prepared according to the method in Example 1, except that in step (3), the amount of the aqueous ammonia is increased, and the pH value of the first slurry during the reaction and the pH value of the second slurry after the reaction are controlled to be 3.0.

### Comparative Example 1

Anhydrous iron phosphate is prepared according to the method in Example 1, except that in step (1), no titanium salt is added, and the ratio of amounts of substance of iron and phosphorus is 1:1.4.

### Comparative Example 2

Anhydrous iron phosphate is prepared according to the method in Example 1, except that after step (4), the rinsed iron phosphate precipitate is directly placed in a muffle furnace, heated to 600°C and kept at the temperature for 2 h for calcination, and then cooled naturally.

### II. Test method

### 1. Detection of titanium content

Content of titanium in the iron phosphate materials prepared in the Examples and Comparative Examples were tested using an inductively coupled plasma optical emission spectrometer (ICP-OES). Test results are shown in Table 1 below.

### 2. Macroscopic property parameter test of iron phosphate material

BET specific surface area test: Specific surface areas of the iron phosphate materials prepared in the Examples and Comparative Examples were tested by using a gas adsorption BET method. Test results are shown in Table 1 below.

Particle size: D50 particle sizes of the iron phosphate materials prepared in the Examples and Comparative Examples were tested by a laser particle size analyzer. Test results are shown in Table 1 below.

Determination of iron content: Under acidic conditions, most of Fe³⁺ in a sample solution was reduced to Fe²⁺ by using stannous chloride. If necessary, a hydrogen peroxide solution was added dropwise to eliminate excess Sn²⁺. By using a sodium tungstate solution as an indicator, Fe³⁺ was further reduced to Fe²⁺ with titanium trichloride. Excess titanium trichloride was reacted with a potassium dichromate solution. Subsequently, ferrous iron was titrated with a potassium dichromate standard titration solution, to obtain the iron content. The content of iron in the iron phosphate materials prepared in Examples and Comparative Examples is shown in Table 1 below.

Determination of phosphorus content: According to a quinolinate-molybdenum gravimetric method, under acidic conditions, orthophosphate ions are reacted with a quinolinate-molybdenum precipitant to produce a yellow quinoline phosphomolybdate precipitate, which is subjected to filtering, washing, drying and weighing, to calculate the phosphorus content. The content of phosphorus in the iron phosphate materials prepared in Examples and Comparative Examples is shown in Table 1 below.

By calculating a ratio of a mole number of iron to a mole number of phosphorus in the iron phosphate material, a ratio of iron to phosphorus (Fe/P) was obtained. Results are shown in Table 1 below.

Measurement of tap density: Tap density of the iron phosphate materials prepared in Examples and Comparative Examples was measured by using a tap density meter.

### 3. Crystal form and morphology test of iron phosphate material

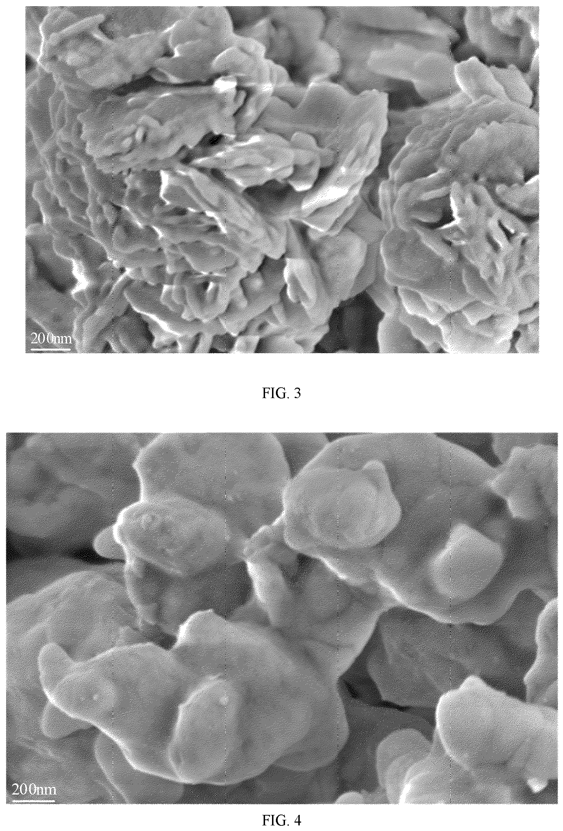

Surface morphology of the iron phosphate materials in Example 1 and Comparative Example 1 is observed by using a scanning electron microscope. Schematic surface morphology diagrams of Example 1 and Comparative Example 1 are shown in FIG. 3 and FIG. 4 respectively.

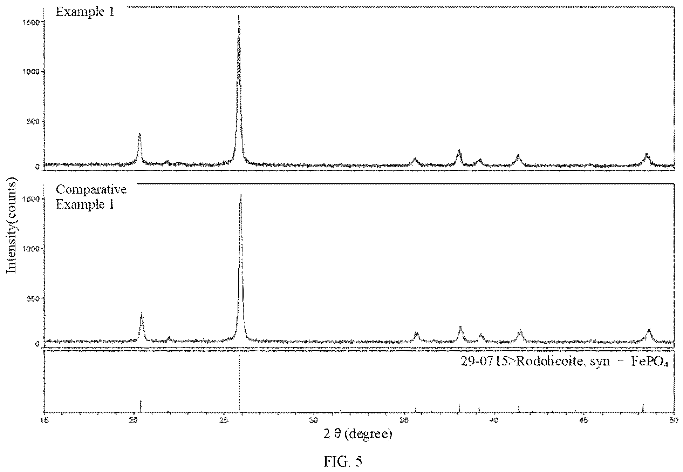

An X-ray powder diffractometer (XRD) was used to XRD-characterize the iron phosphate materials prepared in Example 1 and Comparative Example 1. Results are shown in FIG. 5. The peak map at the bottom of Fig. 5 is a schematic diagram of diffraction peaks of the standard iron phosphate.

### 4. Application performance test of iron phosphate material

First, the iron phosphate materials prepared in above Examples and Comparative Examples each were sintered with a lithium source such as lithium carbonate to obtain respective lithium iron phosphate cathode materials.

Compaction density of the lithium iron phosphate cathode materials prepared in Examples and Comparative Examples was tested using a compaction density meter under a test pressure of 3 T and a pressing time of 30 seconds. Results are shown in Table 2.

Powder resistivity of the lithium iron phosphate cathode materials prepared in Examples and Comparative Examples was tested with a four-probe method under a pressure of 10 MPa. Results are shown in Table 2.

The lithium iron phosphate cathode materials prepared in Examples and Comparative Examples each were mixed with a conductive carbon powder and a PVDF binder in a mass ratio of 90:5:5. After homogenization, the mixture is coated on an aluminum foil, dried at 100°C, and rolled with a roller machine. Next, plates with a diameter of 14 mm were prepared with a punching machine and then weighed; and the mass of the aluminum foil is deducted to obtain the mass of the active substance. After the cathode plates were dried, they are assembled into CR2032 button half cells in the UNlab type inert gas glove box from MBRAUN in Germany. The cells are assembled in order of an anode shell, a lithium sheet, electrolyte, a separator, electrolyte, a cathode plate, a gasket, a spring contact, and a cathode shell. The charge and discharge electrochemical performance of the CR2032 button half cells is tested with the Wuhan Blue Electric CT2001A battery test system at a voltage ranged from 2.0 V to 4.6 V. Test results are shown in Table 2.

**Table 1**

| Batch number | Contents of main elements and ratio of iron to phosphorus | | | Ti content (ppm) | D50 particle size (µm) | Specific surface area (m²/g) | Tap density (g/cm³) |
|---|---|---|---|---|---|---|---|
| | Fe | P | Ratio of iron to phosphorus | | | | |
| Example 1 | 36.09% | 20.72% | 0.97 | 5362 | 46.29 | 9.61 | 1 |
| Example 2 | 36.01% | 20.75% | 0.962 | 7109 | 31.69 | 11.36 | 0.94 |
| Example 3 | 35.96% | 20.61% | 0.968 | 3014 | 36.38 | 9.44 | 1.01 |
| Example 4 | 35.52% | 20.54% | 0.959 | 9331.40 | 39.021 | 11.60 | 0.93 |
| Example 5 | 36.16% | 20.80% | 0.964% | 2081.39 | 34.430 | 9.59 | 0.98 |
| Example 6 | 36.04% | 20.68% | 0.967 | 5139 | 34.586 | 10.37 | 0.94 |
| Example 7 | 36.02% | 20.71% | 0.965 | 5210 | 36.472 | 9.89 | 0.98 |
| Comparative Example 1 | 36.2 | 20.72 | 0.97 | 10.29 | 19.3 | 9.35 | 1.01 |
| Comparative Example 2 | 36.3 | 20.69 | 0.973 | 5188 | 37.51 | 9.44 | 0.79 |

Titanium is not added to the initial mixture in Comparative Example 1, while titanium is added to the initial mixture in Example 1. Referring to FIG. 4, the iron phosphate material prepared in Comparative Example 1 is irregularly granular, in which the primary particle is a single particle. Referring to FIG. 3, compared with Comparative Example 1, the iron phosphate material prepared in Example 1 further has a plurality of stacked sheet structures on the surfaces of the primary particles. Further, according to FIG. 3, the stacked sheet structure generally includes 2 to 4 sheet layers. The stacked sheet structure is formed by splitting the original granular surfaces. A thickness of a single sheet layer ranges from 40 nm to 60 nm, a particle size of a single primary particle ranges from 300 nm to 1000 nm, and a maximum spacing between two adjacent sheet layers ranges from 20 nm to 50 nm. The iron phosphate materials prepared in Example 2 to Example 7 have similar morphology.

Referring to FIG. 5, the iron phosphate materials prepared in Example 1 and Comparative Example 1 exhibit essentially the same diffraction peak pattern, which indicates that the incorporation of a small amount of titanium ions may not significantly change phase characteristics of the iron phosphate material. Compared with the diffraction peak pattern in Comparative Example 1, the overall diffraction peak pattern in Example 1 exhibits a small leftward shift. This is mainly because a radius of titanium atoms is smaller than a radius of iron atoms, doping of titanium atoms increases an interplanar crystal spacing, and accordingly an incident angle corresponding to the diffraction peak may also slightly decrease.

The main difference among Example 1 to Example 5 is the relative contents of titanium and phosphorus in the mixture. The relative content of titanium in Example 1 is 0.0225, the relative content of titanium in Example 2 is 0.03, the relative content of titanium in Example 3 is 0.015, the relative content of titanium in Example 4 is 0.04, and the relative content of titanium in Example 5 is 0.01. A main difference between Example 6 or Example 7 and Example 1 is the control over the pH value in steps (2) and (3). Referring to Table 1, compared with Comparative Example 1, the specific surface areas in Example 1 to Example 7 are all increased in different degrees while the tap density values remain basically unchanged, which facilitates the subsequently prepared cathode material to have relatively low internal resistance and a relatively high specific surface area.

In addition, compared with Comparative Example 1, although titanium is added to the mixture in Comparative Example 2, the amorphous iron phosphate precipitate is directly calcined without being converted into the iron phosphate dihydrate crystals during subsequent preparation, that is, the iron phosphate material is formed based on the amorphous iron phosphate precipitate. The formed iron phosphate material exhibits relatively large particles and fail to split into the stacked sheet structure. Correspondingly, the tap density and the specific surface area in Comparative Example 2 are relatively lower.

**Table 2**

| | Compaction density (g/cm³) | Powder resistance (Ω) | Specific capacity at 0.1C initial charge (mAh/g) | Specific capacity at 0.1C initial discharge (mAh/g) | Discharge efficiency |
|---|---|---|---|---|---|
| Example 1 | 2.424 | 23.1 | 158.34 | 157.94 | 99.75 |
| Example 2 | 2.417 | 14.7 | 157.96 | 157.89 | 99.96 |
| Example 3 | 2.486 | 23.55 | 158.37 | 156.72 | 98.96 |
| Example 4 | 2.443 | 12.1 | 158.01 | 157.82 | 99.88 |
| Example 5 | 2.426 | 23.3 | 159.10 | 156.25 | 98.21 |
| Example 6 | 2.435 | 67.1 | 158.31 | 155.41 | 98.17 |
| Example 7 | 2.441 | 83.9 | 158.29 | 155.10 | 97.99 |
| Comparative Example 1 | 2.445 | 33.3 | 159.56 | 153.66 | 96.30 |
| Comparative Example 2 | 2.389 | 145.7 | 157.63 | 145.80 | 92.5 |

Referring to Table 1 and Table 2, titanium is not doped in Comparative Example 1, the iron phosphate material does not have a stacked sheet structure, and the prepared lithium iron phosphate material exhibits the powder resistance of 33.3 Ω and merely 96.3% of discharge efficiency during charge and discharge.

Referring to Table 1 and Table 2, based on Example 1, Example 2 and Example 4, it can be seen that as titanium in the iron phosphate material increases, the specific surface area of the iron phosphate material increases, but the powder resistance of the prepared lithium iron phosphate material decreases, and the charge and discharge efficiency shows a trend of increasing first and then decreasing. This is mainly due to doping of too much titanium to occupy the site of iron, resulting in reduction of the discharge specific capacity for the prepared lithium iron phosphate material. Based on Example 1, Example 3 and Example 5, it can be seen that as titanium in the iron phosphate material decreases, the specific surface area of the iron phosphate material decreases slightly, but the powder resistance of the prepared lithium iron phosphate material increases slightly, and the charge and discharge efficiency decreases accordingly. These indicate that when the doping amount of titanium is too much or too little, charge and discharge efficiency of the prepared lithium iron phosphate material may be negatively affected to some extent.

In combination of Table 1 and Table 2, compared with Example 1, the prepared lithium iron phosphate materials in Example 6 and Example 7 have significantly higher internal resistance, and the charge and discharge efficiencies thereof are significantly reduced. This is mainly because a relatively high pH value is used during the preparation of the iron phosphate material, which results in a high content of impurities such as magnesium salt and potassium salt in the iron phosphate material.

In combination of Table 1 and Table 2, although titanium is doped in Comparative Example 2, the powder internal resistance of the prepared lithium iron phosphate material is obviously high and even higher than that in Comparative Example 1. This is mainly because prior to subsequent calcination, recrystallization is not carried out in the phosphoric acid solution and regular iron phosphate dihydrate is not formed in Comparative Example 2, which causes uneven sizes for prepared lithium iron phosphate particles, resulting in a significant decrease in charge performance and discharge performance.

It should be noted that the present application is not limited to the foregoing embodiments. The foregoing embodiments are merely examples, and embodiments having substantially the same configurations and effects as those of the technical ideas within the scope of the present application are all included in the technical scope of the present application. In addition, various modifications that can be conceived by those skilled in the art may be made to the embodiments without departing from the spirit and scope of the present application, and other embodiments that are constructed by combining some of the components in the embodiments are also included in the scope of the present application.

## Claims

1. An iron phosphate material, wherein the iron phosphate material is doped with titanium, at least part of surfaces of primary particles of the iron phosphate material are in stacked sheet structures, the stacked sheet structure has a plurality of sheet layers, and any two adjacent sheet layers are respectively located on opposite sides of each other in a stacking direction;
wherein the stacking direction intersects an extending direction of the sheet layer.

2. The iron phosphate material according to claim 1, wherein the surfaces of the primary particles of the iron phosphate material are split into the stacked sheet structure; and/or
a surface of a single primary particle of the iron phosphate material has a plurality of stacked sheet structures; and/or
in each stacked sheet structure, a number of the sheet layers is 2 to 4.

3. The iron phosphate material according to claim 1, wherein a particle size of a single primary particle ranges from 300 nm to 1000 nm; and/or
in the stacked sheet structure, a thickness of each sheet layer ranges from 40 nm to 60 nm; and/or
in the stacking direction, a maximum spacing between two adjacent sheet layers ranges from 20 nm to 50 nm.

4. The iron phosphate material according to any one of claims 1 to 3, wherein the iron phosphate material is represented by a chemical formula of Fe₍₁₋ₙ₎Ti_{0.75n}PO₄, where 0.02≤n≤0.04.

5. The iron phosphate material according to any one of claims 1 to 3, wherein a specific surface area of the iron phosphate material ranges from 9.4 m²/g to 14 m²/g; and/or
a D50 particle size of the iron phosphate material ranges from 30 µm to 60 µm; and/or
a tap density of the iron phosphate material ranges from 0.9 g/cm³ to 1.05 g/cm³.

6. A method for preparing an iron phosphate material, comprising the following steps:
providing a mixture comprising a ferrous salt, a titanium salt and a phosphate salt;
mixing the mixture with a first alkali source to obtain a first slurry;
adding an oxidizing agent and a second alkali source to the first slurry to obtain a second slurry;
subjecting the second slurry to first solid-liquid separation to obtain a filter cake;
mixing the filter cake with a phosphoric acid solution, and ageing same to obtain a third slurry; and
subjecting the third slurry to second solid-liquid separation, drying and calcination to obtain the iron phosphate material.

7. The method for preparing the iron phosphate material according to claim 6, wherein in the mixture, a ratio of an amount of substance of iron to an amount of substance of titanium is 1: (0.015 to 0.03); and/or
in the mixture, a ratio of the amount of substance of iron to an amount of substance of phosphorus is 1: (0.97 to 1.07); and/or
the oxidizing agent comprises a hydrogen peroxide solution, and during adding the oxidizing agent and the second alkali source to the first slurry, a ratio of an amount of substance of hydrogen peroxide in the hydrogen peroxide solution to an amount of substance of ferrous ions in the mixture is (0.55 to 0.75): 1; and/or
the oxidizing agent comprises oxygen gas or compressed air, and during adding the oxidizing agent and the second alkali source to the first slurry, a ratio of an amount of substance of the oxygen gas to the amount of substance of the ferrous ions in the mixture is (0.275 to 0.375): 1, or a ratio of an amount of substance of oxygen gas in the compressed air to the amount of substance of the ferrous ions in the mixture is (0.275 to 0.375): 1.

8. The method for preparing the iron phosphate material according to claim 6 or 7, wherein a pH value of the mixture is 0.5 to 1.5; and/or
after adding the first alkali source to the mixture, a pH value of the first slurry obtained is controlled to be 2.0 to 2.5; and/or
during adding the oxidizing agent and the second alkali source to the first slurry, a pH value is controlled to be 2.0 to 2.5.

9. The method for preparing the iron phosphate material according to claim 6 or 7, wherein the aging step comprises: heating the mixture of the filter cake and the phosphoric acid solution to 85°C to 98°C; and/or
in the step of mixing the filter cake with the phosphoric acid solution, a ratio of an amount of substance of phosphoric acid in the phosphoric acid solution to an amount of substance of the phosphate salt in the mixture is (0.1 to 0.2):1.

10. The method for preparing the iron phosphate material according to claim 6 or 7, wherein the calcination step comprises: calcining the dried material at a temperature of 600°C to 800°C for 2 h to 3 h to form the iron phosphate material.

11. A cathode material, wherein a raw material for the cathode material comprises the iron phosphate material according to any one of claims 1 to 5, or a raw material for the cathode material comprises the iron phosphate material prepared by the method according to any one of claims 6 to 10.

12. A cathode plate, comprising a current collector and a cathode active layer disposed on the current collector, wherein the cathode active layer comprises the cathode material according to claim 11.

13. A secondary battery, comprising a cathode plate and an anode plate, wherein the cathode plate of the secondary battery is the cathode plate according to claim 12.
